# EUROPÄISCHE PATENTSCHRIFT

(11) **EP 1 769 168 B1**
(45) Veröffentlichungstag und Bekanntmachung des Hinweises auf die Patenterteilung: **17.02.2010**
(21) Anmeldenummer: 05768237.9
(22) Anmeldetag: 13.07.2005
(51) Int. Cl.: F16C 33/74, F16C 17/10, F16C 27/06

(54) **LAGERANORDNUNG**
BEARING ARRANGEMENT
ENSEMBLE PALIER

(30) Priorität: 20.07.2004 DE 102004035073
(43) Veröffentlichungstag der Anmeldung: 04.04.2007
(73) Patentinhaber: ZF Friedrichshafen AG, 88038 Friedrichshafen (DE)
(72) Erfinder: BLANKE, Arnold, 49401 Damme (DE); MÄHLMANN, Dirk, 49377 Vechta (DE); RÖSLER, Thomas, 49090 Osnabrück (DE); SCHMIDT, Uwe, 32351 Stemwede (DE)
(86) Internationale Anmeldenummer: PCT/DE2005/001238
(87) Internationale Veröffentlichungsnummer: WO 2006/007822

(56) Entgegenhaltungen:
- DE-A1- 3 800 314
- DE-C1- 4 036 051
- US-A- 3 133 769
- US-A- 3 608 927
- US-A- 4 252 385

## Beschreibung

Die Erfindung betrifft eine Lageranordnung, insbesondere für das Zentralgelenk eines Watt'schen Gestänges, gemäß dem Oberbegriff von Patentanspruch 1.

Gattungsgemäße Lageranordnungen kommen beispielsweise, jedoch keineswegs ausschließlich, als Zentralgelenke bei den eingangs genannten Watt'schen Gestängen zum Einsatz. Watt'sche Gestänge werden insbesondere bei Hinterachsen hochwertiger Kraftfahrzeuge verwendet. Dabei verbindet das Watt'sche Gestänge die Radaufhängungen der beiden Hinterräder dergestalt miteinander sowie mit dem Chassis bzw. mit dem Fahrzeugaufbau, dass eine Einfederung eines bzw. beider Hinterräder ohne Behinderung möglich ist, während jedoch seitliche Bewegungen der Hinterachse bzw. der Hinterräder gegenüber dem Chassis, bei anderen Bauweisen des Watt'schen Gestänges auch Wankbewegungen der Karosserie, unterbunden bzw. reduziert werden.

Lageranordnungen am Kraftfahrzeug, insbesondere Lageranordnungen für derartige Zentralgelenke, unterliegen einer permanenten Kräfte- und Momentenbelastung aufgrund der während der Fahrt des Kraftfahrzeugs auftretenden dynamischen Lasten, beispielsweise infolge der Zentrifugalbeschleunigung bei Kurvenfahrt oder infolge der hochdynamischen Einfederungsbewegungen bei Fahrbahnunebenheiten. Da Gesichtspunkten wie kostensparendem Leichtbau und Einsparung von Bauraum am Kraftfahrzeug eine stetig zunehmende Bedeutung zukommt, wird auch bei derartigen Lageranordnungen das Augenmerk zunehmend auf Verkleinerung und integrierte Modulbauweise gelegt, wodurch die bereits hohen Anforderungen an derartige Lageranordnungen zusätzlich gesteigert werden.

Aus der DE 40 36 050 C1 ist ein Gleitlager für Fahrwerksteile mit einer Innenbuchse und einer Außenbuchse bekannt, wobei beide Lagerbuchsen an einem axial äußeren Ende Axiallagerflächen aufweisen. Hierzu besitzt die Innenbuchse einen sich einseitig am axialen Ende der Innenbuchse erstreckenden, radialen Flanschvorsprung, der sich über eine Gleitfläche wiederum an der axialen Stirnseite der Außenbuchse abstützt. Das aus dieser Druckschrift bekannte Gleitlager umfasst zum Schutz vor Umgebungseinflüssen eine Dichtung, die einstückig mit einem das gesamte Lager umgebenden Gummikörper ausgebildet ist und die beiden aneinander anliegenden Flanschvorsprünge der Lagerbuchsen umgreift.

Dieses bekannte Gleitlager ist jedoch zum einen zwangsläufig unsymmetrisch bzw. in Form von zwei Hälften ausgebildet und muss daher im Allgemeinen in einer paarweise spiegelbildlichen Anordnung eingebaut werden. Hierbei entsteht jedoch grundsätzlich unerwünschtes Axialspiel, was sodann durch entsprechende Maßnahmen wieder ausgeglichen werden muss.

Dies hängt bei diesem bekannten Gleitlager insbesondere damit zusammen, dass die axialen Lagerflächen durch einstückig mit den entsprechenden Buchsen ausgebildete radiale Flanschvorsprünge gebildet sind, weshalb sich die Lagerbuchsen jeweils nur von einer Seite her in eine entsprechende Lageröffnung montieren lassen. Darüberhinaus erschwert die einstückige Ausbildung der Dichtung mit dem das Lager umgebenden Gummikörper einerseits die verformungsfreie Montage insbesondere der Dichtung und verunmöglicht zudem die spätere Wartung bzw. gegebenenfalls den Austausch der Dichtung, ohne dabei das gesamte Lager demontieren zu müssen. Ferner sind zur Realisierung der axialen Lagerung bei derartigen bekannten Gleitlagern zusätzliche separate Bauteile wie beispielsweise Gleitringe erforderlich. Schließlich weist dieses bekannte Gleitlager konstruktionsbedingt sowohl eine hohe axiale wie auch radiale Elastizität auf, die für bestimmte Anwendungen von Gleitlagern jedoch unerwünscht ist. Auch die Abdichtung gegenüber Umgebungseinflüssen ist bei derartigen bekannten Lageranordnungen hohen Anforderungen häufig nicht gewachsen.

Aus der DE 4036051C ist eine Lageranordnung mit den Merkmalen des Oberbegriffs von Anspruch 1 bekannt. Sie weist jedoch den Nachteil auf, dass die Dichtungsanordnung (Scheibe 10) aus nur einem einzigen Werkstoff gebildet ist und somit gegenüber den umgebenden Bauteilen keine optimalen Eigenschaften aufweisen kann.

Mit diesem Hintergrund ist es Aufgabe der vorliegenden Erfindung, eine Lageranordnung zu schaffen, die die genannten Nachteile des Standes der Technik überwindet. Dabei sollen insbesondere die Notwendigkeit zur Zweiteilung der Lageranordnung und die damit verbundenen Probleme mit dem Axialspiel entfallen. Ferner soll die Konstruktion der Lageranordnung modulare Fertigung sowie Montage und damit verbundene geringere Produktions- Montage- und Wartungskosten ermöglichen. Schließlich soll die Lageranordnung möglichst geringe Toleranzen, eine hervorragende Dichtigkeit, eine hohe axiale und ggf. auch radiale Steifigkeit sowie hohe Belastbarkeit und Lebensdauer aufweisen.

Diese Aufgabe wird durch eine Lageranordnung mit den Merkmalen des Patentanspruchs 1 gelöst. Bevorzugte Ausführungsformen sind Gegenstand der Unteransprüche.

Die Lageranordnung gemäß der vorliegenden Erfindung weist in an sich zunächst bekannter Weise eine Innenbuchse und eine Außenbuchse auf, wobei Innenbuchse und Außenbuchse entlang einer den beiden Buchsen gemeinsamen Lageroberfläche relativ zueinander drehbeweglich sind. Bei der Innenbuchse kann es sich prinzipiell auch um einen massiven Lagerbolzen handeln, wobei unter den vorliegenden Einsatzbedingungen, insbesondere beim Einsatz der Lageranordnung in einem Wattgestänge, jedoch im allgemeinen eine hohle Innenbuchse mit einem zusätzlichen Befestigungsbolzen kombiniert werden wird.

In an sich ebenfalls bekannter Weise besitzt die Lageranordnung ferner zumindest eine den stirnseitigen Lagerspalt zwischen Innenbuchse und Außenbuchse umgreifende Dichtungsanordnung, die den Lagerspalt von der Umgebung abschließt. Die Dichtungsanordnung umfasst dabei ein elastisches Dichtungselement mit statischen sowie dynamischen Dichtflächen. Dies bedeutet, dass die Dichtungsanordnung bzw. das elastische Dichtungselement der Dichtungsanordnung insbesondere im Bereich einer der beiden Lagerbuchsen statisch anliegt, während das Dichtungselement im Bereich seiner Anlage an der anderen Lagerbuchse eine gleitende Dichtung bildet.

Erfindungsgemäß zeichnet sich die Lageranordnung jedoch dadurch aus, dass die Dichtungsanordnung als mit der Innenbuchse verbindbares Dichtungsmodul ausgebildet ist. Dabei umfasst das Dichtungsmodul auch ein Tragelement, das Dichtungselement sowie eine Laufflächeneinrichtung zur axialen Lagerung der Außenbuchse relativ zur Innenbuchse, wobei das Dichtelement und die Lauffläche jeweils in Form einer Umspritzung an dem Tragelement ausgeführt sind.

Mit anderen Worten bedeutet dies zunächst einmal, dass die Funktionalität der axialen Lagerung erfindungsgemäß der mit der Innenbuchse verbindbaren, modularen Dichtungsanordnung zugeschlagen wird und somit nicht mehr auf einen einstückig mit der Innenbuchse verbundenen radialen Flanschvorsprung angewiesen ist, wie dies im Stand der Technik zumeist der Fall ist. Auf diese Weise kann sowohl Außenbuchse als auch Innenbuchse im Wesentlichen zylindrisch ausgeführt werden, weshalb auch die gesamte Lagerung durchgehend von einer Seite in die Lageröffnung eingebaut werden kann, ohne dass eine hälftige Teilung der Lagerbuchsen erforderlich ist.

Ferner ermöglicht die Zusammenfassung von Dichtungsanordnung und Laufflächeneinrichtung eine vollständig modulare Bauweise der Lageranordnung sowie deren Dichtung. Insbesondere kann auf diese Weise die als separates Bauteil vorliegende, komplette Dichtungsanordnung einschließlich der axialen Lagerung mit hoher Präzision modular gefertigt, als Modul montiert sowie gegebenenfalls ausgetauscht werden. Somit ist auch zum Austausch der Dichtungsanordnung nicht mehr die Demontage der kompletten Lagerung erforderlich, wie dies im Stand der Technik zumeist der Fall ist.

Zudem lässt sich aufgrund der bei der erfindungsgemäßen Lageranordnung vorgenommenen funktionalen Trennung von Dichtung und Axiallagerung die gewünschte axiale Steifigkeit bzw. axiale Lagerpräzision nach Belieben einstellen bzw. konstruktiv vorsehen. Auf diese Weise ist eine besonders hohe axiale Steifigkeit bzw. Lagergenauigkeit erzielbar, die zudem unabhängig von der etwaigen radialen Nachgiebigkeit der Lageranordnung eingestellt werden kann. Auch wird hierdurch eine besonders gute Dichtigkeit gegenüber Fremdmedien und Umwelteinflüssen erzielt.

Schließlich ermöglicht die funktionale Trennung von Dichtung und Axiallager die Montage der Dichtung unabhängig von der Montage der Lagerbuchsen, insbesondere auch nach der Montage bzw. dem Zusammenbau der Lageraußenbuchse mit angrenzenden Bauteilen, was die montagebedingte Belastung der Dichtung verringert und die Gefahr von Fehlmontagen mit damit verbundener Beeinträchtigung der Lagerlebensdauer reduziert.

Für den Anwendungsfall der Lageranordnung in einem Watt'schen Gestänge führt der erfindungsgemäße Aufbau zu einem exakten, jedoch leichtgängigen Ansprechverhalten des Zentralgelenks und des Watt'schen Gestänges und trägt damit zur Verbesserung des Fahrkomforts sowie der Fahrsicherheit bei.

Die konkrete Bauweise und die für die erfindungsgemäße Lageranordnung verwendeten Materialien, insbesondere für das Dichtungsmodul, sind zunächst einmal nicht erfindungswesentlich, solange die vorgesehene Lebensdauer der Lagerung bzw. Dichtung eingehalten werden kann. Gemäß einer bevorzugten Ausführungsform der Erfindung umfasst das Dichtungsmodul jedoch ein Tragelement, wobei die Laufflächeneinrichtung und das Tragelement aus unterschiedlichen Werkstoffen bestehen. Dies bedeutet mit anderen Worten, dass insbesondere die Laufflächeneinrichtung aus einem Material gefertigt werden kann, das bezüglich Gleiteigenschaften und bezüglich Verschleißbeständigkeit optimiert ist.

Für die Erfindung ist es zudem nicht erheblich, wie die statischen bzw. dynamischen Dichtflächen des Dichtungsmoduls gestaltet bzw. angeordnet sind, solange der Lagerspalt bestimmungsgemäß geschützt ist. So ist es beispielsweise denkbar, dass für statische und dynamische Dichtflächen separate Bauteile vorhanden sind, die jeweils mit dem Tragelement des Dichtungsmoduls verbunden sind. Gemäß einer bevorzugten Ausführungsform der Erfindung ist das elastische Dichtungselement jedoch einstückig, was bedeutet, dass an ein und demselben elastischen Dichtungselement statische und dynamische Dichtflächen angeordnet sind. Bevorzugt umfasst die statische Dichtung einen zwischen Dichtungsmodul und Lagerbock angeordneten, ringförmigen Dichtungsbund.

Ebenfalls nicht erfindungswesentlich ist die Art der Verbindung zwischen der Laufflächeneinrichtung und dem Dichtungsmodul bzw. dem Tragelement des Dichtungsmoduls. Jedoch hintergreift oder durchgreift gemäß einer weiteren, ebenfalls bevorzugten Ausführungsform der Erfindung die Laufflächeneinrichtung das Tragelement formschlüssig. Dies ist insbesondere dann von Vorteil, wenn für die Laufflächeneinrichtung ein besonders verschleißfester Polymerwerkstoff mit besonders geringem Gleitreibungskoeffizienten verwendet wird, der sich erfahrungsgemäß schlecht mit anderen Werkstoffen verbinden bzw. verkleben lässt. In einem solchen Fall sorgt der formschlüssige Hintergriff bzw. Durchgriff der Laufflächeneinrichtung am Tragelement dafür, dass sich die Laufflächeneinrichtung auch dann nicht vom Tragelement lösen oder unkontrollierte Relativbewegungen ausführen kann, wenn der Werkstoff der Laufflächeneinrichtung nicht an dem Werkstoff des Tragelements haftet.

Die Verbindung zwischen Dichtungsmodul bzw. Tragelement und der Innenbuchse der Lageranordnung ist erfindungsgemäß ebenfalls beliebig, solange die für die jeweilige Lagerung erforderlichen Kräfte, insbesondere Axialkräfte, übertragen werden können. Gemäß einer bevorzugten Ausführungsform der Erfindung ist jedoch das Dichtungsmodul bzw. das Tragelement des Dichtungsmoduls auf das axiale Ende der Innenbuchse aufgeschrumpft bzw. aufgepresst. Das Aufschrumpfen bzw. Aufpressen kann dabei beispielsweise im Bereich eines Bundes bzw. radialen Absatzes im Endbereich der Lagerinnenbuchse erfolgen. Auf diese Weise wird eine feste, jedoch rationell zu fertigende und damit kostengünstige Verbindung zwischen Lagerbuchse und Dichtungsmodul bzw. Tragelement erreicht.

Gemäß einer weiteren, ebenfalls bevorzugten Ausführungsform der Erfindung umfasst die Außenbuchse einen Stützring, der eine axiale Anlaufebene besitzt. Der Stützring ist dabei bevorzugt auf die Außenbuchse aufgeschrumpft oder aufgepresst und dient insbesondere als Anlaufebene bzw. Anlauffläche für die dynamische Dichtfläche des Dichtungsmoduls.

Gemäß einer besonders bevorzugten Ausführungsform kommt dabei an der Anlauffläche bzw. in ein und derselben Anlaufebene des Stützrings sowohl die dynamische Dichtfläche des Dichtungsmoduls als auch die Gleitfläche der Laufflächeneinrichtung zur Anlage. Dies ist vorteilhaft, da der Stützring somit eine einfache Gestalt erhält. Der Stützring muss somit lediglich eine einzige, einfach und kostengünstig herstellbare Anlaufebene aufweisen, die aufgrund ihrer einfachen Gestalt und Anordnung jedoch ohne weiteres hochwertig und äußerst präzise gefertigt werden kann.

Gemäß einer alternativen Ausführungsform der Erfindung kann die dynamische Dichtfläche jedoch auch eine eigene Anlauffläche im Bereich des Stützrings oder unmittelbar an der Außenbuchse aufweisen. Hierzu kann die dynamische Dichtung, die Stirnseite der Außenbuchse vollständig umgreifend, insbesondere an einem Außenumfang der Außenbuchse zur Anlage kommen. Diese Ausführungsform ist nicht nur besonders platzsparend, sondern ermöglicht auch eine Vormontage der Lageranordnung aus Innenbuchse, Außenbuchse und Dichtungsmodul, wobei die dergestalt vormontierten Lagerbestandteile aufgrund des Umgriffes des dann balgartigen elastischen Dichtungselements um die Lagerbuchsen vorläufig zusammengehalten werden.

Ausführung und Material der aufeinander gleitenden Lageroberflächen von Innenbuchse bzw. Außenbuchse sind ebenfalls nicht erfindungswesentlich. So können Innenbuchse und Außenbuchse beispielsweise entlang einer zylindrischen Lageroberfläche unmittelbar aneinander zur Anlage kommen bzw. aufeinander gleiten. Gemäß einer bevorzugten Ausführungsform der Erfindung ist die Lagerfläche jedoch innenbuchsenseitig durch ein zusätzliches Lagerelement aus Polymer gebildet. Dabei liegt das Lagerelement besonders bevorzugt in Form einer Kunststoffumspritzung der Innenbuchse vor, insbesondere aus einem thermoplastischen Polyurethan.

Thermoplastische Polyurethane sind vorteilhaft aufgrund ihrer speziellen Materialeigenschaften. Thermoplastische Polyurethane zeichnen sich insbesondere durch hohe Zähigkeit bei gewisser Flexibilität sowie durch extrem hohe Abriebfestigkeit und gutes Schwingungsdämpfungsvermögen bei gleichzeitig guter Medienbeständigkeit aus.

Gemäß einer weiteren bevorzugten Ausführungsform der Erfindung umfasst das Kunststoff-Lagerelement zumindest eine zusätzliche dynamische Dichtung zum Schutz der Lagerfläche zwischen Innenbuchse und Außenbuchse. Diese zusätzliche dynamische Dichtung kann beispielsweise in Gestalt von ringförmigen Dichtlippen vorliegen, die sich im Bereich der axial außenliegenden Enden der Lageranordnung zwischen den Oberflächen von Innenbuchse und Außenbuchse erstrecken.

Gemäß einer weiteren bevorzugten Ausführungsform der Erfindung kann die statische Dichtung eine axial zwischen Lagerelement und Dichtungsmodul bzw. Tragelement angeordnete Ringdichtung umfassen. Diese statische Ringdichtung verhindert, dass eventuell im Bereich der Pressverbindung zwischen Tragelement und Innenbuchse vorliegende bzw. eingedrungene Verunreinigungen in den Bereich der Lagerfläche zwischen Innenbuchse und Außenbuchse vordringen können.

Nach einer weiteren, besonders bevorzugten Ausführungsform der Erfindung umfasst das Dichtungsmodul einen zusätzlichen Spritzschutz vorzugsweise im radial äußeren Bereich des Dichtungsmoduls bzw. des elastischen Dichtungselements.

Dieser zusätzliche Spritzschutz kann insbesondere als berührungsfreier Dichtspalt bzw. nach Art einer Labyrinthdichtung ausgebildet sein und bildet so eine erste Barriere für Schmutz, Feuchtigkeit und andere potenziell schädliche Umgebungsmedien. Zudem schirmt der zusätzliche Spritzschutz die schleifende dynamische Dichtfläche des Dichtungsmoduls beispielsweise auch vor dem Wasserstrahl der heute gebräuchlichen Hochdruckreiniger ab. Bevorzugt ist dabei der zusätzliche Spritzschutz einstückig mit dem elastischen Dichtungselement ausgebildet.

Das Material des elastischen Dichtungselements ist prinzipiell beliebig, solange die jeweils notwendigen Dichtungseigenschaften und Lebensdauerforderungen erfüllt werden. Besonders bevorzugt besteht das elastische Dichtungselement jedoch aus Nitril-Butadien-Kautschuk, der sich aufgrund seiner Beständig gegen die unterschiedlichsten Medien sowie aufgrund seiner vorteilhaften mechanischen Eigenschaften als besonders geeignet für derartige Dichtungszwecke erwiesen hat.

Insgesamt ist es zur Verwirklichung der Erfindung nicht erforderlich, dass die Lageranordnung symmetrisch aufgebaut ist und/oder beide Enden von Innenbuchse bzw. Außenbuchse einen gleichartigen Aufbau bzw. dasselbe Dichtungsmodul aufweisen, da prinzipiell auch unsymmetrische bzw. lediglich einseitige Lageranordnungen denkbar sind und zum Einsatz kommen können. Insbesondere beim Einsatz der Lageranordnung für ein Watt'sches Gestänge ist jedoch bevorzugt vorgesehen, dass die Lageranordnung an beiden axialen Enden jeweils ein Dichtungsmodul und/oder einen Stützring aufweist. Aufgrund der dank der Erfindung möglichen Modulbauweise der Lageranordnung bietet sich hierbei insbesondere an, an beiden Enden der Lagerung identische Dichtungsmodule bzw. Stützringe anzuordnen.

Im Folgenden wird die Erfindung anhand lediglich Ausführungsbeispiele darstellender Zeichnungen näher erläutert. Dabei zeigt:
- **Fig. 1**: in schematischer perspektivischer Darstellung ein Zentralgelenk für ein Watt'sches Gestänge einer Kraftfahrzeugachse;
- **Fig. 2**: in schematischer Schnittdarstellung das Zentralgelenk gemäß **Fig. 1** mit einer ersten Ausführungsform einer erfindungsgemäßen Lageranordnung, im Schnitt durch die Gelenkachse;
- **Fig. 3**: in ausgebrochener Schnittdarstellung einen vergrößerten Ausschnitt aus **Fig. 2** gemäß Markierung "A" in **Fig. 2****;**
- **Fig. 4**: in einer **Fig. 3** entsprechenden Darstellung den Ausschnitt gemäß **Fig. 3** in einer anderen Schnittebene;
- **Fig. 5**: in einer **Fig. 2** entsprechenden Darstellung ein Zentralgelenk gemäß **Fig. 1** mit einer weiteren Ausführungsform einer erfindungsgemäßen Lageranordnung;
- **Fig. 6**: in einer **Fig. 3** und **4** entsprechenden Darstellung einen vergrößerten Ausschnitt aus **Fig. 5** gemäß Markierung "B" in **Fig. 5****;** und
- **Fig. 7**: in einer **Fig. 3, 4** und **6** entsprechenden Darstellung den Ausschnitt gemäß **Fig. 6** in einer anderen Schnittebene.

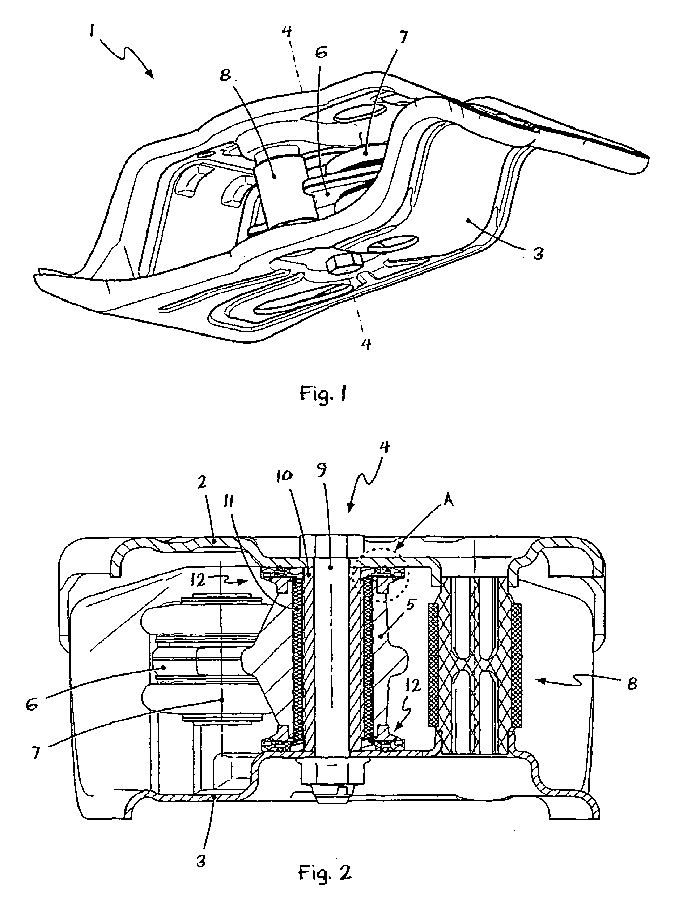

**Fig. 1** zeigt in schematischer Darstellung zunächst den Zusammenbau eines Zentralgelenks 1 für ein Wattgestänge einer Kraftfahrzeugachse.

Man erkennt zunächst einmal zwei das Gehäuse bzw. den Lagerbock des Zentralgelenks 1 bildende Blechbauteile 2, 3. Die in **Fig. 1** nur teilweise sichtbare Wippe bzw. Koppel 6 des Wattgestänges ist mit der drehbaren Außenbuchse 5 einer Lageranordnung 4 verbunden, die sich in der Darstellung von **Fig. 1** hinter der Koppel 6 befindet und daher verdeckt ist. Die beiden Hülsengelenke 7 der Koppel 6, von denen in **Fig. 1** lediglich ein Hülsengelenk 7 teilweise sichtbar ist, dienen der Anlenkung und kinematischen Kopplung der (hier nicht dargestellten) Schubstreben des Wattgestänges.

Anhand **Fig. 1** wird erkennbar, dass das Zentralgelenk 1 äußerst kompakt und damit platz- und gewichtssparend aufgebaut ist, was jedoch aufgrund der kurzen Hebelarme der Koppel 6 umso größere Kräfte und Momente im Bereich der Buchsen und der Lagerung 4 des Zentralgelenks 1 zur Folge hat.

Sämtliche Bauteile des Zentralgelenks 1, insbesondere die Lagerung 4, müssen daher höchsten Anforderungen bezüglich Belastbarkeit, Ausfallsicherheit und Lebensdauer genügen. Dies gilt umso mehr, als bei der dieser Ausführungsform zugrundeliegenden Anwendung der erfindungsgemäßen Lageranordnung das Watt'sche Gestänge eine für die Fahrstabilität des Kraftfahrzeugs elementare Baugruppe darstellt, deren Ausfall die Beherrschbarkeit des Fahrzeugs entscheidend beeinträchtigen kann und damit unter allen Umständen vermieden werden muss.

**Fig. 2** zeigt das Zentralgelenk 1 gemäß **Fig. 1** im Schnitt durch die Gelenkachse. Man erkennt zunächst wieder die Gehäusebauteile bzw. Lagerböcke 2, 3. Ferner wird in **Fig. 2** die Gestalt der Lagerung 4 des Zentralgelenks 1 mit der die Koppel 6 tragenden Außenbuchse 5 sowie des Anschlagpuffers 8 zur Begrenzung der Rotationsbewegung der Lagerung 4 bzw. der Koppel 6 erkennbar. Ebenso lässt sich eines der beiden auf der Koppel 6 angeordneten Hülsengelenke 7 erkennen, das sich in Fig. 2 hinter der Schnittebene befindet.

Die Lagerung 4 der Koppel 6 des Wattgestänges umfasst im Wesentlichen die mittels des Bolzens 9 im Gehäuse bzw. in den Lagerböcken 2, 3 drehfest und starr befestigte Innenbuchse 10, die die Koppel 6 tragende Außenbuchse 5 sowie ein zwischen Innenbuchse 10 und Außenbuchse 5 angeordnetes, zusätzliches Lagerelement 11 aus Kunststoff. Ferner weist die Lagerung an beiden axialen Lagerenden jeweils eine Dichtungsanordnung bzw. ein Dichtungsmodul 12 auf.

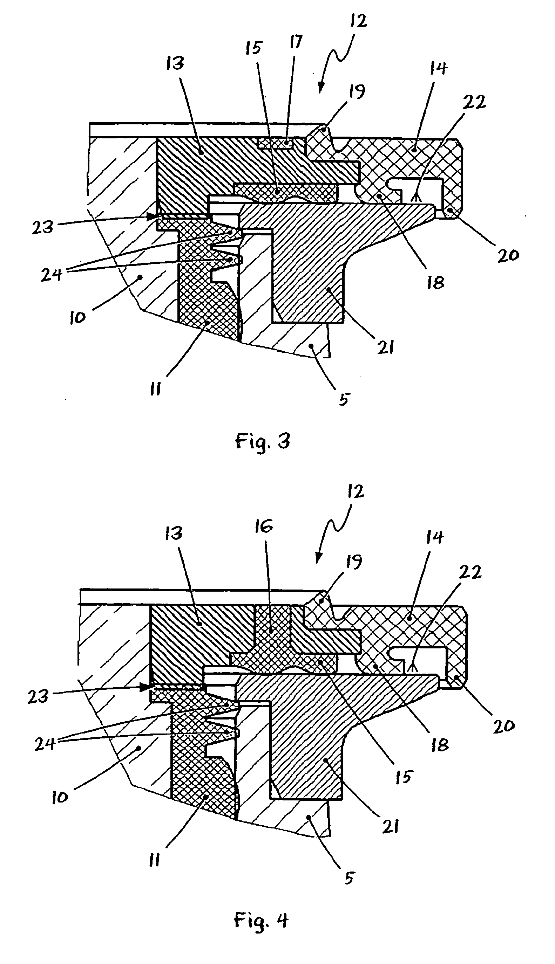

Der genauere Aufbau der Dichtungsanordnung bzw. des Dichtungsmoduls 12 geht aus **Fig. 3** bzw. **Fig. 4** hervor. Der in **Fig. 3** bzw. **4** dargestellte vergrößerte Ausschnitt entspricht dem in **Fig. 2** mit Buchstabe "A" bezeichneten Bereich. Man erkennt zunächst die aufgrund der ausgebrochenen Schnittdarstellung nur teilweise sichtbare Innenbuchse 10 sowie die aus demselben Grund ebenfalls nur teilweise sichtbare Außenbuchse 5 der Lagerung 4. Bei dem dargestellten Ausführungsbeispiel gleiten die Oberflächen von Innenbuchse 10 und Außenbuchse 5 nicht unmittelbar aufeinander. Vielmehr ist die Innenbuchse 10, die hierzu beispielsweise auch aus Aluminium gefertigt sein kann, mit einem zusätzlichen Lagerelement 11 aus einem thermoplastischen Polyurethan umspritzt, auf dessen radial äußerer Oberfläche die Außenbuchse drehbar gelagert ist.

Weiter erkennt man in **Fig. 3** bzw. in **Fig. 4** die Dichtungsanordnung bzw. das Dichtungsmodul 12 der erfindungsgemäßen Lageranordnung 4. Das Dichtungsmodul 12 umfasst das ringförmige Tragelement 13, das elastische Dichtungselement 14 sowie Laufflächeneinrichtung 15, 16, 17 bzw. Lauffläche 15. Man erkennt, dass das Tragelement 13 im Bereich eines zylindrischen Absatzes auf die Innenbuchse 10 aufgepresst ist, und dass sowohl Lauffläche 15 als auch elastisches Dichtungselement 14 jeweils in Form einer Umspritzung des Tragelements 13 mit entsprechendem Polymerwerkstoff ausgeführt ist. Dabei durchgreift die die Lauffläche 15 bildende Umspritzung 15, 16, 17 das Tragelement 13 in einer Reihe von axialen Ausnehmungen 16, was sich aus einer Zusammenschau der **Fig. 3** und **4** ergibt. **Fig. 3** und 4 unterscheiden sich dabei lediglich im Winkel der Schnittebene durch die Achse des Zentralgelenks 1 bzw. der Lageranordnung 4.

Um eine zuverlässige formschlüssige Verbindung zwischen Lauffläche 15 und Tragelement 13 zu gewährleisten, stehen die umspritzten Ausnehmungen 16 auch auf der der Lauffläche 15 gegenüberliegenden Rückseite des Tragelements 13 mittels eines Steges 17 in Verbindung, was aus der Schnittdarstellung von **Fig. 3** hervorgeht. Auf diese Weise lassen sich auch solche Werkstoffe für die Lauffläche 14 verwenden, die eine nur geringe oder auch keinerlei Neigung zum Anhaften am Werkstoff des Tragelements 13 aufweisen. Lediglich beispielhaft seien hier die bekannten PTFE-Lagerwerkstoffe und dergleichen genannt.

Die das elastische Dichtungselement 14 bildende Umspritzung des Tragelements 13 weist in der dargestellten Ausführungsform im Wesentlichen drei funktionale Vorsprünge bzw. Lippen 18, 19, 20 auf. Hierzu zählt die dynamische bzw. gleitende Dichtfläche 18, die auf dem mit der Außenbuchse 5 verbundenen Stützringe 21 gleitet, und die auf der Rückseite des Tragelements 13 angeordnete statische Dichtfläche 19, die die Abdichtung gegenüber den (hier nicht dargestellten) Gehäuseschalen bzw. Lagerböcken 2, 3 des Zentralgelenks 1 gewährleistet, siehe **Fig. 2****.** Ferner weist das elastische Dichtungselement 14 eine an seinem Außenumfang angeordnete weitere Dichtlippe 20 auf, die einen zusätzlichen Spritzschutz 20 für die weiter innen liegende, hochbeanspruchte gleitende Dichtfläche 18 bildet.

Der auf die Außenbuchse 5 aufgepresste Stützring 21 bildet auf seiner zeichnungsbezogen oberen Radialebene die Anlauffläche 22 sowohl für die gleitende bzw. dynamische Dichtung 18 des elastischen Dichtungselements 14 als auch für die Lauffläche 15, welche die weitgehend starre axiale Lagerung der Außenbuchse 5 relativ zur Innenbuchse 10 bildet. Der separate, von der Außenbuchse 5 getrennte Stützring 21 ist insofern vorteilhaft, als er beispielsweise aus einem anderen Werkstoff als die Außenbuchse 5 selbst gefertigt werden kann, wobei dieser Werkstoff optimal an die Anforderungen der gleitenden Dichtung 18 bzw. der Axiallagerung 15 angepasst werden kann. Ferner wird auf diese Weise auch die Montage des Zentralgelenks 1 erleichtert und es lassen sich bessere Lagertoleranzen erzielen, beispielsweise indem die Stützringe 21 für die Lageranordnung 4 erst nach dem Verschweißen von Außenbuchse 5 und Koppel 6 an der Außenbuchse 5 angeordnet werden.

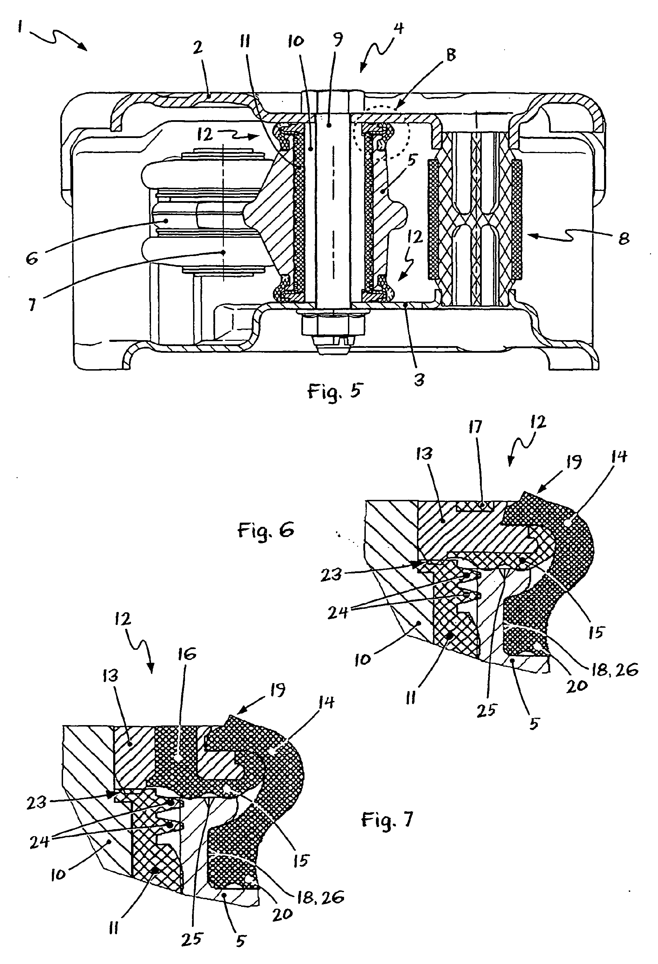

Im Bereich axial zwischen Lagerelement 11 und Dichtungsmodul 12 bzw. Tragelement 13 ist gemäß der Darstellung der **Fig. 3** und **4** **-** wie auch beim weiteren Ausführungsbeispiel gemäß **Fig. 5** bis **7** - eine weitere statische Dichtung 23 angeordnet. Die statische Dichtung 23 kann entweder in Form eines ringförmigen Dichtelements 23 zwischen Lagerelement 11 und Tragelement 13 angeordnet sein. Sie kann jedoch beispielsweise auch in Form eines einstückig an Lagerelement 11 selbst angeformten ringförmigen Absatzes 23 gebildet sein, der bei Montage der Lageranordnung 4 an das Tragelement 13 angepresst wird.

Die statische Dichtung 23 verhindert, dass eventuell im Bereich der Pressverbindung zwischen Tragelement 13 und Innenbuchse 10 eingedrungene Verunreinigungen in den Bereich der Lagerfläche zwischen Innenbuchse 10 bzw. Lagerelement **11** und Außenbuchse 5 vordringen können. Ebenso dem Schutz der Lagerfläche zwischen Innenbuchse 10 bzw. Lagerelement **11** und Außenbuchse 5 dienen zusätzliche gleitende Dichtlippen 24, die insbesondere einstückig mit dem Lagerelement **11** ausgebildet sein können.

**Fig. 5** stellt in einer **Fig. 2** entsprechenden Schnittdarstellung ein Zentralgelenk mit einer weiteren Ausführungsform einer erfindungsgemäßen Lageranordnung 4 dar, wohingegen die **Fig. 6** und **7** den hier mit Buchstabe "B" bezeichneten Ausschnitt aus der Darstellung der **Fig. 5** in vergrößerter, ausgebrochener Schnittdarstellung zeigen.

Die Ausführungsform gemäß **Fig. 5** bis **7** unterscheidet sich von der Ausführungsform gemäß **Fig. 2** bis **4** primär durch die Gestaltung und Anordnung des elastischen Dichtungselements 14 sowie durch das Fehlen des Stützrings 21 bei der Ausführungsform gemäß **Fig. 2** bis **4**.

Anstelle des Stützrings 21 bildet bei der Ausführungsform gemäß **Fig. 5** bis 7 die Stirnfläche 25 der Außenbuchse 5 selbst die Anlauffläche 25 für die Lauffläche 15 des Dichtungsmoduls 12. Das Dichtungsmodul 12 selbst umfasst wieder ein ringförmiges Tragelement 13, eine das Tragelement 13 in Ausnehmungen 16 und Stegen 17 durchgreifend umspritzte Lauffläche 15, sowie ein elastisches Dichtungselement 14. Das Dichtungselement 14 ist wiederum im Bereich der statischen Dichtfläche 19 fest mit dem Tragelement 13 verbunden, während es, in einer Ringnut 26 auf der Außenseite der Außenbuchse gleitend, die dynamische Dichtfläche 18 bildet.

Bei der Montage der Lageranordnung 4 bzw. des Zentralgelenks 1 gemäß **Fig. 5** bzw.
**Fig. 2** wird jeweils eine die statische Dichtung 19 bildende Lippe an die Blech-Gehäuseschalen bzw. Lagerböcke 2, 3 des Zentralgelenks 1 angepresst und dabei zusätzlich relativ zu den Lagerböcken 2, 3 sowie zur stillstehenden Innenbuchse 10 fixiert. Insgesamt ergibt sich auf diese Weise eine vollständige Kapselung der Lagerung 4 für die Koppel 6 des Zentralgelenks 1 und damit ein zuverlässiger Schutz dieses hochbeanspruchten Bauteils.

Im Ergebnis wird deutlich, dass die Erfindung insbesondere ermöglicht, die Lageranordnung beispielsweise für das Zentralgelenk eines Wattgestänges, sowie deren Abdichtung vollkommen modular aufzubauen, was dementsprechende Vorteile in Bezug auf Fertigung, Lagerhaltung, Montage und Wartung der Lageranordnung mit sich bringt. Weiterhin können dank der Erfindung ungeteilte durchgehende Lagerbuchsen verwendet werden, was ebenfalls die Montage sowie zudem die Belastbarkeit und Lebensdauer der erfindungsgemäßen Lageranordnung im Vergleich zum Stand der Technik erhöht. Die erfindungsgemäße Lageranordnung weist ferner eine besonders gute Dichtigkeit gegenüber Umwelteinflüssen sowie ein exaktes und leichtgängiges Ansprechverhalten auf. Schließlich lässt sich auch die axiale sowie die radiale Steifigkeit der Lageranordnung dank der Erfindung unabhängig voneinander dimensionieren, was für hochbeanspruchte Lagerstellen wie das in Rede stehende, kompakte Zentralgelenk entscheidende Vorteile mit sich bringt.

Die Erfindung leistet damit einen wesentlichen Beitrag zur wirtschaftlichen Produktion von hoch belastbaren Lageranordnungen für Wattgestänge, Stabilisatoren, Radaufhängungen und dergleichen.

### Bezugszeichenliste

- 1: Zentralgelenk
- 2: Lagerbock
- 3: Lagerbock
- 4: Lagerbereich, Lageranordnung
- 5: Außenbuchse
- 6: Koppel
- 7: Hülsengelenk
- 8: Anschlagpuffer
- 9: Bolzen
- 10: Innenbuchse
- 11: Lagerelement
- 12: Dichtungsmodul
- 13: Tragelement
- 14: elastisches Dichtungselement
- 15: Laufflächeneinrichtung, Lauffläche, Axiallagerung
- 16: Laufflächeneinrichtung, axiale Ausnehmung
- 17: Laufflächeneinrichtung, Steg
- 18: gleitende/dynamische Dichtfläche
- 19: statische Dichtfläche, Dichtungsbund
- 2 0: Spritzschutz
- 21: Stützring
- 2 2: Anlaufebene, Anlauffläche
- 2 3: statische Dichtfläche, Ringdichtung
- 24: zusätzliche dynamische Dichtung
- 25: Anlauffläche
- 26: Außenumfang, Ringnut

## Patentansprüche

1. Lageranordnung (4), insbesondere für das Zentralgelenk (1) eines Watt'schen Gestänges, die Lageranordnung (4) aufweisend eine Innenbuchse (10) und eine Außenbuchse (5), wobei die Innenbuchse (10) und die Außenbuchse (5) mittels einer gemeinsamen Lagerfläche relativ zueinander rotationsbeweglich sind, die Lageranordnung (4) aufweisend ferner zumindest eine den stirnseitigen Lagerspalt zwischen Innenbuchse (10) und Außenbuchse (5) umgreifende und von der Umgebung abschließende Dichtungsanordnung (12), die Dichtungsanordnung (12) umfassend ein elastisches Dichtungselement (14) mit statischen sowie dynamischen Dichtflächen und ein Tragelement (13),
**dadurch gekennzeichnet, dass** die Dichtungsanordnung (12) als mit der Innenbuchse (10) verbindbares Dichtungsmodul (12) ausgebildet ist, wobei das Dichtungsmodul (12) das Tragelement (13), das Dichtungselement (14) sowie eine Laufflächeneinrichtung (15, 16, 17) umfasst, wobei das Dichtungselement (14) und die Lauffläche (15) jeweils in Form einer Umspritzung an dem Tragelement (13) ausgeführt sind und wobei die Laufflächeneinrichtung (15) zur axialen Lagerung der Außenbuchse (5) ausgebildet ist.

2. Lageranordnung (4) nach Anspruch 1,
**dadurch gekennzeichnet, dass** das Dichtungsmodul (12) ein Tragelement (13) umfasst, wobei Laufflächeneinrichtung (15) und Tragelement (13) aus unterschiedlichen Werkstoffen bestehen.

3. Lageranordnung (4) nach Anspruch 1 oder 2,
**dadurch gekennzeichnet, dass** das elastische Dichtungselement (14) einstückig ist.

4. Lageranordnung (4) nach einem der Ansprüche 1 bis 3,
**dadurch gekennzeichnet, dass** die statische Dichtung einen zwischen dem Dichtungsmodul (12) und einem Lagerbock (2, 3) angeordneten Dichtungsbund (19) umfasst.

5. Lageranordnung (4) nach einem der Ansprüche 2 bis 4,
**dadurch gekennzeichnet, dass** die Laufflächeneinrichtung (15) das Tragelement (13) formschlüssig hintergreift.

6. Lageranordnung (4) nach einem der Ansprüche 1 bis 5,
**dadurch gekennzeichnet, dass** das Dichtungsmodul (12) auf das axiale Ende der Innenbuchse (10) aufgeschrumpft bzw. aufgepresst ist.

7. Lageranordnung (4) nach einem der Ansprüche 1 bis 6,
**dadurch gekennzeichnet, dass** die Außenbuchse (5) einen Stützring (21) mit einer axialen Anlaufebene (22) aufweist.

8. Lageranordnung (4) nach Anspruch 7,
**dadurch gekennzeichnet, dass** der Stützring (21) auf das axiale Ende der Außenbuchse (5) aufgeschrumpft oder aufgepresst ist.

9. Lageranordnung (4) nach Anspruch 7 oder 8,
**dadurch gekennzeichnet, dass** an der Anlaufebene (22) dynamische Dichtfläche (18) und Laufflächeneinrichtung (15) zur Anlage kommen.

10. Lageranordnung (4) nach einem der Ansprüche 1 bis 6,
**dadurch gekennzeichnet, dass** die dynamische Dichtfläche (18), die Stirnseite der Außenbuchse (5) umgreifend, an einem Außenumfang (26) der Außenbuchse (5) zur Anlage kommt.

11. Lageranordnung (4) nach einem der Ansprüche 1 bis 10,
**dadurch gekennzeichnet, dass** die Lagerfläche innenbuchsenseitig durch ein Lagerelement (11) aus Polymer gebildet ist.

12. Lageranordnung (4) nach Anspruch 11,
**dadurch gekennzeichnet, dass** das Lagerelement (11) in Form einer Kunststoffumspritzung der Innenbuchse (10) vorliegt.

13. Lageranordnung (4) nach Anspruch 11 oder 12,
**dadurch gekennzeichnet, dass** das Lagerelement (11) aus einem thermoplastischen Polyurethan (TPU) besteht.

14. Lageranordnung (4) nach einem der Ansprüche 11 bis 13,
**dadurch gekennzeichnet, dass** das Lagerelement (11) zumindest eine zusätzliche dynamische Dichtung (24) zum Schutz der Lagerfläche umfasst.

15. Lageranordnung (4) nach einem der Ansprüche 11 bis 14,
**dadurch gekennzeichnet, dass** die statische Dichtung eine zwischen Lagerelement (11) und Dichtungsmodul (12) angeordnete Ringdichtung (23) umfasst.

16. Lageranordnung (4) nach einem der Ansprüche 1 bis 15,
**dadurch gekennzeichnet, dass** das Dichtungsmodul (12) einen zusätzlichen Spritzschutz (20) umfasst.

17. Lageranordnung (4) nach Anspruch 16,
**dadurch gekennzeichnet, dass** der zusätzliche Spritzschutz (20) einstückig mit dem elastischen Dichtungselement (14) ausgebildet ist.

18. Lageranordnung (4) nach einem der Ansprüche 1 bis 17,
**dadurch gekennzeichnet, dass** das elastische Dichtungselement (14) aus Nitril-Butadien-Kautschuk (NBR) besteht.

19. Lageranordnung (4) nach einem der Ansprüche 1 bis 18,
**dadurch gekennzeichnet, dass** die Lageranordnung (4) an beiden Enden der Innenbuchse (10) bzw. Außenbuchse (5) jeweils ein Dichtungsmodul (12) und an wenigstens einem Ende einen Stützring (21) umfasst.

## Claims

1. Bearing arrangement (4), in particular for the central joint (1) of a Watt's linkage, the bearing arrangement (4) comprising an inner bush (10) and an outer bush (5), wherein the inner bush (10) and the outer bush (5) are rotationally movable relative to one another by means of a common bearing surface, the bearing arrangement (4) further comprising at least one sealing arrangement (12), which encompasses the end-face bearing gap between inner bush (10) and outer bush (5) and seals off the end-face bearing gap from the environment, the sealing arrangement (12) comprising a flexible sealing element (14) having static and dynamic sealing surfaces as well as a supporting element (13),
**characterized in that** the sealing arrangement (12) is designed as a sealing module (12) that is connectable to the inner bush (10), wherein the sealing module (12) comprises the supporting element (13), the sealing element (14) and a running surface device (15, 16, 17), wherein the sealing element (14) and the running surface (15) are realized in each case in the form of an injection moulding around the supporting element (13) and wherein the running surface device (15) is designed as the axial bearing arrangement of the outer bush (5).

2. Bearing arrangement (4) according to claim 1,
**characterized in that** the sealing module (12) comprises a supporting element (13), wherein running surface device (15) and supporting element (13) are made of different materials.

3. Bearing arrangement (4) according to claim 1 or 2,
**characterized in that** the flexible sealing element (14) is integral.

4. Bearing arrangement (4) according to one of claims 1 to 3,
**characterized in that** the static seal comprises a sealing collar (19) disposed between the sealing module (12) and a bearing bracket (2, 3).

5. Bearing arrangement (4) according to one of claims 2 to 4,
**characterized in that** the running surface device (15) engages positively behind the supporting element (13).

6. Bearing arrangement (4) according to one of claims 1 to 5,
**characterized in that** the sealing module (12) is shrunk and/or pressed onto the axial end of the inner bush (10).

7. Bearing arrangement (4) according to one of claims 1 to 6,
**characterized in that** the outer bush (5) comprises a support ring (21) having an axial abutment plane (22).

8. Bearing arrangement (4) according to claim 7,
**characterized in that** the support ring (21) is shrunk and/or pressed onto the axial end of the outer bush (5).

9. Bearing arrangement (4) according to claim 7 or 8,
**characterized in that** dynamic sealing surface (18) and running surface device (15) come into abutment with the abutment plane (22).

10. Bearing arrangement (4) according to one of claims 1 to 6,
**characterized in that** the dynamic sealing surface (18), encompassing the end face of the outer bush (5), comes into abutment with an outer periphery (26) of the outer bush (5).

11. Bearing arrangement (4) according to one of claims 1 to 10,
**characterized in that** the bearing surface at the inner bush side is formed by a polymer bearing element (11).

12. Bearing arrangement (4) according to claim 11,
**characterized in that** the bearing element (11) is in the form of a plastic injection moulding around the inner bush (10).

13. Bearing arrangement (4) according to claim 11 or 12,
**characterized in that** the bearing element (11) is made of a thermoplastic polyurethane (TPU).

14. Bearing arrangement (4) according to one of claims 11 to 13,
**characterized in that** the bearing element (11) comprises at least one additional dynamic seal (24) for protecting the bearing surface.

15. Bearing arrangement (4) according to one of claims 11 to 14,
**characterized in that** the static seal comprises a ring seal (23) disposed between bearing element (11) and sealing module (12).

16. Bearing arrangement (4) according to one of claims 1 to 15,
**characterized in that** the sealing module (12) comprises an additional splash guard (20).

17. Bearing arrangement (4) according to claim 16,
**characterized in that** the additional splash guard (20) is formed integrally with the flexible sealing element (14).

18. Bearing arrangement (4) according to one of claims 1 to 17,
**characterized in that** the flexible sealing element (14) is made of nitrile-butadiene rubber (NBR).

19. Bearing arrangement (4) according to one of claims 1 to 18,
**characterized in that** the bearing arrangement (4) comprises one sealing module (12) at each end of the inner bush (10) and/or inner bush (5) and a support ring (21) at at least one end.

## Revendications

1. Agencement de palier (4), en particulier pour l'articulation centrale (1) d'une tringlerie de Watt, lequel agencement de palier (4) présente une douille interne (10) et une douille externe (5), dans lequel la douille interne (10) et la douille externe (5) sont mobiles en rotation l'un par rapport à l'autre au moyen d'une surface de palier commune, lequel agencement de palier (4) présente en outre au moins un agencement d'étanchéité (12) enveloppant l'espace frontal de palier entre la douille interne (10) et la douille externe (5) et l'isolant de l'environnement, lequel agencement d'étanchéité (12) comprend un élément d'étanchéité élastique (14) avec des surfaces d'étanchéité statiques et dynamiques et un élément porteur (13), **caractérisé en ce que** l'agencement d'étanchéité (12) se présente sous la forme d'un module d'étanchéité (12) pouvant être raccordé à la douille interne (10), dans lequel le module d'étanchéité (12) comprend l'élément porteur (13), l'élément d'étanchéité (14), ainsi qu'un système de surfaces de roulement (15, 16, 17), dans lequel l'élément d'étanchéité (14) et la surface de roulement (15) sont réalisés respectivement par enrobage sur l'élément porteur (13) et dans lequel le système de surface de roulement (15) est formé pour l'appui axial de la douille externe (5).

2. Agencement de palier (4) selon la revendication 1,
**caractérisé en ce que** le module d'étanchéité (12) comprend un élément porteur (13), dans lequel le système de surface de roulement (15) et l'élément porteur (13) sont constitués de matériaux différents.

3. Agencement de palier (4) selon la revendication 1 ou 2,
**caractérisé en ce que** l'élément d'étanchéité élastique (14) est d'un seul tenant.

4. Agencement de palier (4) selon l'une quelconque des revendications 1 à 3,
**caractérisé en ce que** le joint d'étanchéïté statique comprend un cordon d'étanchéité (19) agencé entre le module d'étanchéité (12) et un support de palier (2, 3).

5. Agencement de palier (4) selon l'une quelconque des revendications 2 à 4, **caractérisé en ce que** le système de surface de roulement (15) s'engage par complémentarité de formes derrière l'élément porteur (13).

6. Agencement de palier (4) selon l'une quelconque des revendications 1 à 5,
**caractérisé en ce que** le module d'étanchéité (12) est emmanché ou emmanché par pression sur l'extrémité axiale du coussinet interne (10).

7. Agencement de palier (4) selon l'une quelconque des revendications 1 à 6,
**caractérisé en ce que** la douille externe (5) présente une bague d'appui (21) avec un plan de butée axial (22).

8. Agencement de palier (4) selon la revendication 7,
**caractérisé en ce que** la bague d'appui (21) est emmanché ou emmanché par pression sur l'extrémité axiale de la douille externe (5).

9. Agencement de palier (4) selon la revendication 7 ou 8,
**caractérisé en ce que** la surface d'étanchéité dynamique (18) et le système de surface de roulement (15) prennent appui sur le plan de butée (22).

10. Agencement de palier (4) selon l'une quelconque des revendications 1 à 6,
**caractérisé en ce que** la surface d'étanchéité dynamique (18), enveloppant la face frontale de la douille externe (5), prend appui sur un pourtour externe (26) de la douille externe (5).

11. Agencement de palier (4) selon l'une quelconque des revendications 1 à 10,
**caractérisé en ce que** la surface de palier est formée, côté douille interne, par un élément de palier (11) en polymère.

12. Agencement de palier (4) selon la revendication 11,
**caractérisé en ce que** l'élément de palier (11) est réalisé par enrobage par un matériau synthétique de la douille interne (10).

13. Agencement de palier (4) selon la revendication 11 ou 12,
**caractérisé en ce que** l'élément de palier (11) est constitué d'un polyuréthane thermoplastique (TPU).

14. Agencement de palier (4) selon l'une quelconque des revendications 11 à 13, **caractérisé en ce que** l'élément de palier (11) comprend au moins un joint d'étanchéité dynamique supplémentaire (24) pour protéger la surface de palier.

15. Agencement de palier (4) selon l'une quelconque des revendications 11 à 14, **caractérisé en ce que** le joint d'étanchéité statique comprend un joint d'étanchéité annulaire (23) agencé entre l'élément de palier (11) et le module d'étanchéité (12).

16. Agencement de palier (4) selon l'une quelconque des revendications 1 à 15,
**caractérisé en ce que** le module d'étanchéité (12) comprend une protection supplémentaire (20) contre les projections.

17. Agencement de palier (4) selon la revendication 16,
**caractérisé en ce que** la protection supplémentaire contre les projections (20) est réalisée d'un seul tenant avec l'élément d'étanchéité élastique (14).

18. Agencement de palier (4) selon l'une quelconque des revendications 1 à 17,
**caractérisé en ce que** l'élément d'étanchéité élastique (14) est constitué de caoutchouc nitrile-butadiène (NBR).

19. Agencement de palier (4) selon l'une quelconque des revendications 1 à 18,
**caractérisé en ce que** l'agencement de palier (4) comprend respectivement un module d'étanchéité (12) aux deux extrémités de la douille interne (10) ou de la douille externe (5) et une bague d'appui (21) à au moins une extrémité.
